# EUROPEAN PATENT SPECIFICATION

(11) **EP 0 960 902 B1**
(45) Date of publication and mention of the grant of the patent: **04.08.2004**
(21) Application number: 98900412.2
(22) Date of filing: 16.01.1998
(51) Int. Cl.: C08J 9/14

(54) **PROCESS FOR THE PRODUCTION OF SYNTHETIC RESIN FOAMS**
VERFAHREN ZUR HERSTELLUNG VON SCHAUMKUNSTSTOFFEN
PROCEDE DE PRODUCTION DE MOUSSES DE RESINE DE SYNTHESE

(30) Priority: 28.01.1997 JP 1373597
(43) Date of publication of application: 01.12.1999
(73) Proprietor: DAIKIN INDUSTRIES, LTD., Kita-ku, Osaka 530 (JP)
(72) Inventor: SHIBATA, Noriaki-Yodogawa Seisakusho, Settsu-shi,Osaka 566 (JP); IDE, Satoshi-Yodogawa Seisakusho, Settsu-shi,Osaka 566 (JP); SHIBANUMA, Takashi-Yodogawa Seisakusho, Settsu-shi,Osaka 566 (JP)
(74) Representative: Luderschmidt, Schüler & Partner GbR
(86) International application number: PCT/JP1998/000165
(87) International publication number: WO 1998/032788

(56) References cited:
- WO-A-96/23017
- WO-A-97/38045
- JP-A- 5 239 251
- JP-A- 9 111 032
- JP-A- 9 176 059
- US-A- 5 562 857

## Description

### TECHNICAL FIELD

The present invention relates to a process for producing a polyurethane or polyisocyanurate foam and more particularly to a process for producing such a synthetic resin foam characterized by using a specific low-boiling organic blowing agent.

### BACKGROUND ART

A synthetic resin foam is generally produced by reacting a polyol with a polyisocyanate compound in the presence of a catalyst and a blowing agent. The resulting synthetic resin foam may for example be a polyurethane foam or a polyisocyanurate foam.

In the production of a synthetic resin foam, e.g. a polyurethane foam, trichlorofluoromethane (CFC-11) has been usually employed as a low-boiling organic blowing agent.

However, it has recently been pointed out that when released into the atmosphere, certain kinds of flons destroy the ozone layer of the stratosphere and warm the earth by a greenhouse effect to thereby inflict a serious hazard on the ecosystem of the earth, inclusive of the human race. Therefore, the use of flons with high risks for destruction of the ozonosphere has been restricted by international conventions. CFC-11 referred to above is subject to this restriction and, from this viewpoint as well, development of a new blowing agent having no risk or a reduced risk for destruction of the ozonosphere or warming of the earth is being awaited.

Recently as flons more lenient to the ozonosphere, 1,1-dichloro-1-fluoroethane and 1,1-dichloro-2,2,2-trifluoroethane have been proposed and put to use for some time but since they contain chlorine within the respective molecules, even those chlorofluoroalkanes have risks for destroying the ozonosphere.

Meanwhile, some technologies involving the use of fluorinated hydrocarbons not containing chlorine and therefore having no risk for destruction of the ozonosphere have been proposed (e.g. Japanese Unexamined Patent Publications Nos. 29440/1990 and 235982/1990), and Japanese Unexamined Patent Publication No. 239251/1993 describes the use of 1,1,1,3,3-pentafluoropropane as a blowing agent in the production of plastic foams.

Furthermore, documents JP 9-176059, WO 97/38045 and US 5,562,857 disclose mixtures of fluorinated and non-fluorinated hydrocarbons.

1,1,1,3,3-pentafluoropropane (HFC-245fa) is a nonflammable compound boiling at 15°C and a fluorinated hydrocarbon containing hydrogen, suggesting that its potential for ozonosphere destruction and earth warming is low. Moreover, since this compound has a boiling point close to that of CFC-11 and is nonflammable, it is attracting attention as a promising substitute for CFC-11.

However, HFC-245fa has a slightly low boiling point so that it is rather quickly evaporated at a high ambient temperature to render production of a foam difficult. Moreover, it is not well soluble in polyols and, in premix systems, tends to cause phase separation so that the range of compatible polyols is limited.

In reacting a polyol with an isocyanate to produce a foam, those low-boiling and poor compatibility characteristics tend to cause poor blending, unreacted residues, and formation of coarse cells known as voids, thus detracting from the strength and thermal conductivity which are important physical qualities required of rigid urethane foams. Therefore, in order that HFC-245fa may function effectively as a substitute for CFC-11, it is essential to develop a technology for controlling its characteristics such as boiling point and solubility.

### DISCLOSURE OF THE INVENTION

The primary object of the present invention is to provide a process for producing a synthetic resin foam with high heat insulation and mechanical strength characteristics and more particularly to provide a process for producing a resin foam which comprises using a blowing agent which has no risk for destruction of the ozonosphere, a low potential for warming the earth, and a suitable boiling point, besides being nonflammable and well compatible with the resin formulation.

After an intensive research done to overcome the disadvantages of the prior art, the inventors of the present invention discovered that when a production process comprising reacting a polyol with a polyisocyanate compound in the presence of a blowing agent to provide a synthetic resin foam, e.g. a polyurethane foam or a polyisocyanurate foam, is carried out using a mixture of 5-95 weight % of 1,1,1,3,3-pentafluoropropane (HFC-245fa) and 95-5 weight % of a hydrocarbon selected from the group consisting of 2,2-dimethylbutane and 2,3 dimethylbutane as said blowing agent, the above object is neatly accomplished. The present invention has been developed on the basis of the above finding.

The present invention, therefore, is directed to a process for producing a synthetic resin foam comprising reacting a polyol with a polyisocyanate compound in the presence of a low-boiling organic blowing agent to provide a polyurethane or polycyanurate form, characterized in that a mixture of 5-95 weight % of 1,1,1,3,3-pentafluoropropane and 95-5 weight % of a hydrocarbon having a boiling point between 20°C and 70°C is used as said low-boiling organic blowing agent.

The low-boiling organic blowing agent for use in the present invention is a mixture of 5-95 weight % of 1,1,1,3,3-pentafluoropropane (HFC-245fa) and 95-5 weight % of a hydrocarbon selected from the group consisting of 2,2 dimethylbutane and 2,3 dimethylbutane.

The mixture can comprise additionally hydrocarbons having a boiling point between 20°C and 70°C, that can be used, includes 2-methylbutane (b.p. 30°C), n-pentane (b.p. 35°C), 2,2-dimethylbutane (b.p. 50°C), 2,3-dimethylbutane (b.p. 58°C), cyclopentane (b.p. 50°C), and 2-methylpentane (b.p. 62°C). Particularly preferred is cyclopentane. Those hydrocarbons can be used each alone or in a suitable combination of two or more species.

Having lower molecular weights than HFC-245fa, those hydrocarbons cause foaming with higher efficiency. Moreover, because they boil at higher temperatures than HFC-245fa, those hydrocarbons are not easily evaporated even when the ambient temperature is high. Therefore, the production of a foam is facilitated. Furthermore, as a surprising discovery, it was found that although hydrocarbons are generally considered to be poorly compatible with polyols, there are cases in which the compatibility of those hydrocarbons with polyols is synergistically improved when they are used in admixture with HFC-245fa, thus broadening the range of compatible polyols. In addition, the nonflammable component HFC-245fa which is low-boiling and ready to be evaporated contributes to suppressed evaporation of inflammable hydrocarbons, with the result that the range of nonflammable mixtures can be expanded by using HFC-245fa in combination with those hydrocarbons.

The ratio of HFC-245fa to said hydrocarbon is 5-95 weight % / 95-5 weight % (former/latter) and a suitable ratio can be selected from this range according to the intended application and resin formulation, although the range giving a mixture boiling point of about 20-30°C is particularly preferred.

The mixing ratio giving a mixture boiling point within the above range of 20-30°C is as follows, taking the hydrocarbons mentioned hereinbefore as examples. It should be understood, however, that in view of the flammability of those hydrocarbons, their proportions in the mixtures are preferably as small as possible.

2-Methylbutane 10-95 weight %; n-pentane 5-60 weight %; 2,2-dimethylbutane 5-50 weight %; 2,3-dimethylbutane 5-40 weight %; cyclopentane 5-50 weight %; 2-methylpentane 5-30 weight %.

The particularly preferred blowing agent for purposes of the present invention is a mixture of 50-95 weight % of 1,1,1,3,3-pentafluoropropane (HFC-245fa) and 5-50 weight % of cyclopentane.

The low-boiling organic blowing agent consisting of the above-defined mixture according to the present invention can be used not only independently but also in combination with a different blowing agent or water. In many instances, water in particular is used in combination with said low boiling organic blowing agent.

The blowing agent other than water which can be used concomitantly includes low-boiling halogenated hydrocarbons such as 1,1-dichloro-1-fluoroethane, methylene chloride, 1,1,1,2-tetrafluoroethane, air, and inert gases such as nitrogen gas and carbon dioxide gas.

When any of those other blowing agents are used, the low-boiling organic blowing agent of the present invention preferably accounts for not less than 20 weight %, particularly not less than 40 weight %, of the total blowing agent.

In the present invention, the amount of the total blowing agent for the production of a synthetic resin foam is generally controlled within the range of 1-100 parts by weight, preferably 10-30 parts by weight, to each 100 parts by weight of a polyol.

Where necessary, a decomposition inhibitor can be added to the blowing agent of the present invention. The decomposition inhibitor that can be used with advantage includes nitro compounds such as nitrobenzene, nitromethane, aromatic hydrocarbons such as α-methylstyrene, p-isopropenyltoluene, aliphatic unsaturated hydrocarbons such as isoprene, 2,3-dimethylbutadiene, epoxy compounds such as 1,2-butylene oxide, epichlorohydrin, and phenol compounds such as p-t-butylcatechol, 2,6-di-t-butyl-p-cresol, and so on.

The proportion of such a decomposition inhibitor may generally be 0.05-5 parts by weight to each 100 parts by weight of the low boiling organic blowing agent for use in accordance with the present invention. The decomposition inhibitor may be dissolved in the low boiling organic blowing agent beforehand or may be added independently to a foaming system.

Referring to the other materials for use in the production of a polyurethane or polyisocyanurate foam, the conventional materials can be employed. The following are examples of such materials.

The polyisocyanate compound may be any of the aliphatic, alicyclic, and aromatic organic isocyanates described in inter alia Keiji Iwata, Polyurethane Resin Handbook, 71-98, Nikkan Kogyo Shimbun, Ltd. Among the polyisocyanates in the commonest use are 2,4-tolylene diisocyanate (2,4-TDI) and 2,6-tolylene diisocyanate (2,6-TDI). Particularly, a 80/20 (w/w) or 65/35 (w/w) mixture of 2,4-TDI and 2,6-TDI is mostly employed. Polymethylenepolyphenylene isocyanate (crude MDI) obtainable by treating an aniline-formaldehyde condensate with phosgene is also utilized.

The polyol that can be used in this invention includes the polyether polyols and polyester polyols described in inter alia Keiji Iwata, Polyurethane Resin Handbook, 99-117, Nikkan Kogyo Shimbun, Ltd.

Among those polyols, polyether polyols can be prepared by reacting an alkylene oxide with an initiator having active hydrogen atom. Examples are polyols with 2-8 functional groups and a hydroxyl value of 300-800 mg KOH/g which can be obtained by reacting the initiator such as ethylene glycol, trimethylolpropane, glycerol, triethanolamine, ethylenediamine, a methyl glycoside, tolylenediamine, sorbitol, sucrose, with an alkylene oxide such as ethylene oxide or propylene oxide.

As the polyester polyol, those polyols each having 2-4 functional groups and a hydroxyl value of 250-500 mg KOH/g, among the condensate type polyester polyols obtainable by dehydrative condensation of adipic acid and either glycol or toluol, lactone series polyesters obtainable by ring-opening polymerization of caprolactam, and polycarbonate diols, can be employed.

The catalyst can be a tertiary amine, an organometal compound, or a mixture of them. Usually, the catalyst is used in a proportion of 0.01-10 parts by weight, preferably 0.1-5 parts by weight, to each 100 parts by weight of the polyol.

The tertiary amine which can be used as the catalyst includes monoamines such as triethylamine, dimethylcyclohexylamine, diamines such as tetramethylethylenediamine, tetramethylhexamethylenediamine, cyclic amines such as triethylenediamine, 1,2-dimethylimidazole, and alcohol amines such as dimethylaminoethanol and so on. The organometal compound includes stannous octoate, dibutyltin dilaurate, dibutyltin diacetate, lead octylate, and so on.

Among the other additives for the production of a polyurethane foam, the foam stabilizer may for example be a silicone series stabilizer or a fluorine-containing surfactant. Specifically, a polysiloxane-polyalkylene block copolymer and a surfactant based on methylpolysiloxane can be used. The foam stabilizer can be used generally in a proportion of 0.1-10 parts by weight to each 100 parts by weight of the polyol.

By the process for producing a synthetic resin foam in accordance with the present invention, a polyurethane or polyisocyanurate foam can be produced by reacting a polyol with a polyisocyanate compound in the presence of the above-defined low boiling organic blowing agent. The polyol-to-polyisocyanate ratio can be liberably selected but it is generally preferable to use a formulation such that the polyol has 1-3 equivalents of active hydrogen per isocyanate group of the polyisocyanate compound.

The production conditions may be conventional. The production equipment can be of any type only if the charge can be evenly admixed. Thus, using a mixer or a foaming machine, for instance, the polyol, polyisocyanate compound, blowing agent, catalyst, and other additives are thoroughly mixed and molded to give the objective foam. As to the blowing agent and other additives, a homogeneous foam is more easily obtained when they are dissolved in the polyol component beforehand and added as a premix, although this is not an exclusive choice but they can be dissolved in the polyisocyanate compound beforehand.

The low-boiling organic blowing agent for use in the present invention has no risk for destruction of the ozonosphere, a low potential for warming the earth, and a suitable boiling point, besides being nonflammable and well compatible with resin foam formulations, and by reacting the starting materials in the presence of this particular blowing agent, a synthetic resin foam with satisfactory heat insulation, mechanical strength and other characteristics can be provided.

### BEST MODE FOR CARRYING OUT THE INVENTION

The following examples illustrate the present invention merely in further detail and should by no means be construed as defining the scope of the invention.

The polyols and blowing agents used in the following examples were as follows.
Polyol (i): a polyether polyol with a hydroxyl value of 770 as prepared by reacting ethylenediamine with propylene oxide
Polyol (ii): a polyether polyol with a hydroxyl value of 440 as prepared by reacting tolylenediamine with propylene oxide
Polyol (iii): a polyether polyol with a hydroxyl value of 450 as prepared by reacting sucrose with propylene oxide
Blowing agent (a): 1,1,1,3,3-pentafluoropropane
Blowing agent (b): cyclopentane
Blowing agent (c): 1,1,1,3,3-pentafluoropropane/2-methylbutane (70/30 wt. %), b.p. 21°C, inflammable
Blowing agent (d): 1,1,1,3,3-pentafluoropropane/n-pentane (80/20 wt. %), b.p. 21°C, inflammable
Blowing agent (e): 1,1,1,3,3-pentafluoropropane/2,2-dimethylbutane (90/10 wt. %), b.p. 20°C, nonflammable
Blowing agent (f): 1,1,1,3,3-gentafluoropropane/cyclopentane (90/10 wt. %), b.p. 21°C, nonflammable

### Test Example 1 Compatibility with polyols

A 50 ml glass bottle with a screw-on stopper was charged with 10 g of one of the above-enumerated blowing agents (a)-(f), and 20 g of said polyol (i), (ii), or (iii), as a total of 30 g, and shaken on a shaking machine for 10 minutes. The bottle was then allowed to stand at room temperature for 5 hours and the degree of phase separation was grossly evaluated. The results are shown in Table 1. The evaluation was made according to the following criteria.
A: homogeneous without separation
B: partial separation
C: separation

**Table 1**

| Polyol | Comparative blowing agent | | Blowing agent of the invention | | | |
|---|---|---|---|---|---|---|
| | Blowing agent a | Blowing agent b | Comparative Blowing agent c | Comparative Blowing agent d | Blowing agent e | Comparative Blowing agent f |
| i | B | B | A | A | A | A |
| ii | A | A | A | A | A | A |
| iii | B | B | A | A | A | A |

It will be apparent from Table 1 that the mixed blowing agents according to the present invention are well compatible with polyols in the mixing ratios practically used, providing stable premixes. Examples 1-4 and Comparative Examples 1 and 2

### Production of Foams

Each 100 parts by weight of polyol (ii) was mixed with 1.5 parts by weight of a silicone series foam stabilizer, 1 part by weight of water, a necessary amount of the catalyst N,N,N',N'-tetramethylhexane-1,6-diamine to give a rise time of 70 seconds, and a blowing agent and the mixture was stirred vigorously. This stirred mixture was added to 112 parts by weight of crude polymethylenepolyphenylene isocyanate (Nippon Polyurethane Industry Co., Ltd.; MR-100) and the mixture was subjected to intense agitation to provide a rigid polyurethane foam. The proportion of the blowing agent was adjusted so as to control the core density of the foam to 25±1 kg/m³.

Table 2 shows the physical characteristics of each product foam as determined 1 day after blowing and after 1-week-long aging at -20°C or room temperature. The evaluation of foams was made in accordance with JIS A 9514.

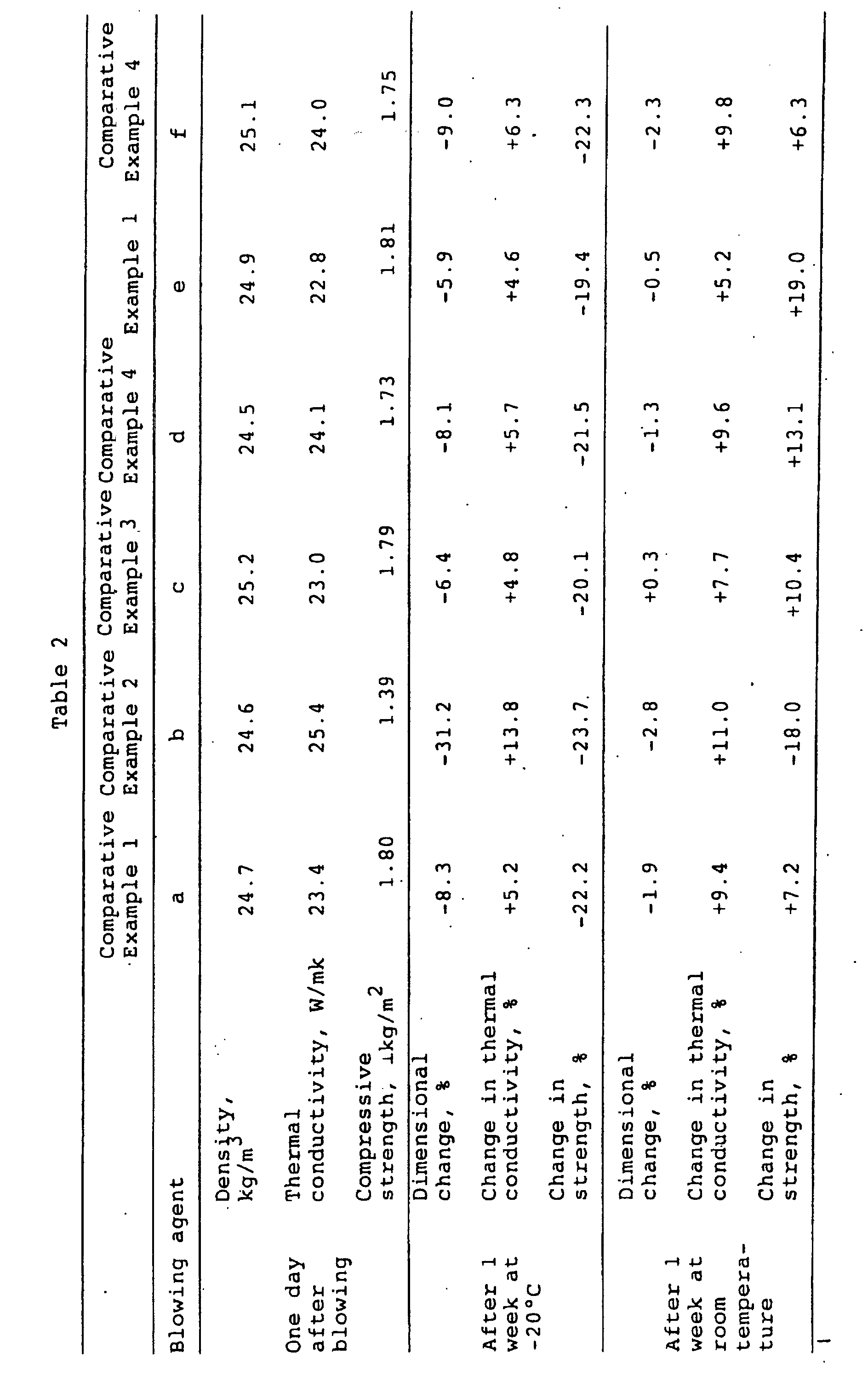

It will be apparent from Table 2 that the use of the mixed blowing agent according to this invention is conducive to production of a polyurethane foam with very satisfactory characteristics.

## Claims

1. A process for producing a synthetic resin foam comprising reacting a polyol with a polyisocyanate compound in the presence of a low-boiling organic blowing agent to provide a polyurethane or polyisocyanurate foam, **characterized in that** a mixture of 5-95 weight % of 1,1,1,3,3-pentafluoropropane and 95-5 weight % of at least one hydrocarbon selected from the group consisting of 2,2-dimethylbutane and 2,3-dimethylbutane is used as said low-boiling organic blowing agent.

2. A blowing agent for polyurethane or polyisocyanurate which is a mixture of 5-95 weight % of 1,1,1,3,3-pentafluoropropane and 95-5 weight % of at least one hydrocarbon selected from the group consisting of 2,2-dimethylbutane and 2,3-dimethylbutane.

## Patentansprüche

1. Verfahren zur Herstellung eines Syntheseharzschaums, bei dem man ein Polyol mit einer Polyisocyanatverbindung in Gegenwart eines niedrig siedenden organischen Treibmittels umsetzt, um einen Polyurethan- oder Polyisocyanuratschaum bereitzustellen, **dadurch gekennzeichnet, dass** man eine Mischung von 5-95 Gew.-% 1,1,1,3,3,-Pentafluorpropan und 95-5 Gew.-% mindestens eines Kohlenwasserstoffs, der ausgewählt ist aus 2,2-Dimethylbutan und 2,3-Dimethylbutan, als niedrig siedendes organisches Treibmittel verwendet.

2. Treibmittel für Polyurethan oder Polyisocyanurat, das eine Mischung ist aus 5-95 Gew.-% 1,1,1,3,3-Pentafluorpropan und 95-5 Gew.-% mindestens eines Kohlenwasserstoffs, der ausgewählt ist aus 2,2-Dimethylbutan und 2,3-Dimethylbutan.

## Revendications

1. Procédé de production de mousses de résines de synthèse comprenant la réaction d'un polyol avec un composé polyisocyanate en présence d'un agent organique gonflant à bas point d'ébullition pour mettre à la disposition un mousse de polyuréthane ou de polyisocyanurate **caractérisé en ce qu'**un mélange de 5 - 95 % de poids de 1, 1,1,3,3-pentafluorpropane et 95 - 5 % de poids d'au moins un hydrocarbure choisi du groupe se composant de 2,2-dimethylbutane et 2,3-dimethylbutane est utilisé comme ledit agent gonflant organique à bas point d'ébullition.

2. Agent gonflant pour polyuréthane ou polyisocyanurate qui est un mélange de 5 - 95 % de poids de 1,1,1,3,3-pentafluorpropane et 95 - 5 % de poids d'au moins un hydrocarbure choisi du groupe se composant de 2,2-dimethylpropane et 2,3-dimethylbutane.
